(19) **Europäisches Patentamt / European Patent Office / Office européen des brevets**

(11) **EP 1 793 238 B1**

(12) **EUROPEAN PATENT SPECIFICATION**

(45) Date of publication and mention
of the grant of the patent:
**06.05.2009 Bulletin 2009/19**

(21) Application number: **05780928.7**

(22) Date of filing: **25.08.2005**

(51) Int Cl.:
*G01S 5/02* (2006.01)　　　*G01S 5/14* (2006.01)

(86) International application number:
**PCT/JP2005/015404**

(87) International publication number:
**WO 2006/022318 (02.03.2006 Gazette 2006/09)**

(54) **INDEPENDENT POSITIONING DEVICE AND INDEPENDENT POSITIONING METHOD**

EINRICHTUNG UND VERFAHREN ZUR UNABHÄNGIGEN POSITIONIERUNG

DISPOSITIF DE POSITIONNEMENT INDEPENDENT ET PROCEDE DE POSITIONNEMENT INDEPENDENT

(84) Designated Contracting States:
**DE FR GB**

(30) Priority: **25.08.2004 JP 2004244808**

(43) Date of publication of application:
**06.06.2007 Bulletin 2007/23**

(73) Proprietors:
• **The Ritsumeikan Trust**
  **Kyoto 604-8415 (JP)**
• **TOYOTA JIDOSHA KABUSHIKI KAISHA**
  **Toyota-shi,**
  **Aichi-ken, 471-8571 (JP)**

(72) Inventors:
• **SUGIMOTO, Sueo**
  **5360023; (JP)**
• **KUBO, Yukihiro, c/o Ritsumeikan University**
  **Kusatsu-shi**
  **Shiga 525-8577 (JP)**
• **KAGAWA, Kazunori**
  **Toyota-shi,**
  **Aichi 4718571 (JP)**
• **TAJIMA, Yasuhiro**
  **Toyota-shi,**
  **Aichi 4718571 (JP)**
• **NAKAMURA, Mitsuru,**
  **Toyota Jidosha KK**
  **Aichi 471-8571 (JP)**

(74) Representative: **Müller, Frithjof E.**
**Müller Hoffmann & Partner**
**Patentanwälte**
**Innere Wiener Strasse 17**
**81667 München (DE)**

(56) References cited:
JP-A- 02 134 587　　　JP-A- 07 128 430
JP-A- 2002 517 731　　JP-A- 2003 216 658
US-A- 5 828 336　　　US-A- 5 899 957
US-A- 5 963 167　　　US-B1- 6 373 432
US-B1- 6 407 700

• YAMAWAKI K.: 'Eisei Sokui Algorithm no Togo to sono Unyo Koka (Integration of Satellite Navigation Algorithm and It's Applicative Effect)' AERONAUTICAL AND SPACE SCIENCE JAPAN vol. 41, no. 475, 1993, pages 472 - 481, XP002998823
• GLOBAL POSITIONING SYSTEM PUBLISHED IN: 'Navigation', vol. 1, 1980 article VAN DIERENDONCK A. J. ET AL: 'The GPS Navigation Message', pages 55 - 73, XP002998824
• YOUNES A. AND BENHALLAM A.: 'Improvements in GPS Integrity monitoring for non-precision sole means of navigation using hybrid GPS-INS' PROCEEDINGS OF THE 10TH INTERNATIONAL TECHNICAL MEETING OF THE SATELLITE DIVISION OF THE INSTITUTE OF NAVIGATION 1997, pages 509 - 518, XP002998825

**Description**

TECHNICAL FIELD

The invention relates to point positioning apparatus and point positioning method configured to estimate a receiver's position by utilizing the satellite signals transmitted from the satellites.

BACKGROUND ART

Various types of a point positioning apparatus and method which estimate the point position utilizing the satellite signals of positioning from the satellites are disclosed. A basic positioning estimation of these apparatus is to introduce a nonlinear simultaneous equation comprising of a code pseudorange, a receiver's position in three dimensions, and a clock error of a receiver. And this estimation applied a Newton method, an extended Kalmann Filter to the nonlinear simultaneous equation. Applying to this estimation, various types of a method to eliminate an influence of an ionosphere and a troposphere are disclosed, too. One method set the delay of the ionosphere and the delay of the troposphere to "0" at initial condition. And the other method estimated these delay utilizing a phase difference, including single phase difference.

The Geodetic Society of Japan, [ Shinteiban GPS -jinkoueisei niyoru seimitsusokuisisutemu - (in Japanese), A new edition GPS - A precise positioning system - ], JAPAN ASSOCIATION OF SURVEYORS, November 15, 1989, p.121-140

Document US 5,899,957 A discloses a carrier phase differential GPS correction network for determining corrections to carrier phase signals at an arbitrary location. Within or adjacent a given region N spaced apart GPS reference stations with N > 4 with fixed location coordinates are provided with high accuracy. Each reference station receives GPS signals from at least four common-view GPS satellites and computes its own GPS determined location coordinates, compares these coordinates with its own location coordinates and determines pseudo range corrections for its GPS determined location. Further, the correction signals are transmitted to a central station which is located within or adjacent to the region. A correction function is determined that provides a carrier phase correction with respect to a GPS signal received at any selected location within a selected region.

The publication "The GPS navigation message", Navigation, Vol. 1. 1980, pages 55 - 73 discusses the dependence of the quality of a GPS navigation message depending on different parameters and properties such as the kind of representation, the kind of algorithm, message size, accuracy, update frequency, user computational requirements and the like, in order to evaluate future appropriate design structures for GPS navigation messages. Inter alia, aspects of space vehicle clock correction parameters and ionospheric propagation delay model parameters are also discussed.

Document US 5,963,167 A relates to an analyzing system for global positioning systems and for general satellite tracking. New features as yaw compensation, precise satellite positioning by high-rate GPS clocks, enhanced data filtering and smoothing, and new user interfaces for controlling the orientation are discussed. The subject matter is aimed on a fully automatic operation and delivery of validated daily solutions for orbits, clocks, station locations and other without involving human intervention. Inter alia, the concept is based on estimating effects of earth geometric factors and a plurality of transmitting delays of involved broadcast signals.

Document US 5,828,336 A discloses a robust real-time wide-area differential GPS navigation in the sense of a differential GPS system by utilizing a real-time computation of satellite orbits based on GPS data received from fixed ground stations through a Karman type filter/smoother the output of which adjusting a real-time orbital model for obtaining corrections regarding satellite ephemerides.

DISCLOSURE OF THE INVENTION

A conventional point positioning apparatus and method utilizing the code pseudorange estimate the position by ignoring an actual delay of the ionosphere and an actual delay of the troposphere. The conventional point positioning apparatus and method had not estimated the point position until an estimation result had a satisfactory accuracy. Consequently the estimation result of the positioning varied widely, so we could not estimate the position with a high accuracy. Furthermore in the case of using the single phase difference with the code pseudorange, the delay data of the ionosphere, and the delay data of the troposphere, estimation result could have the high accuracy. But this estimation process was complicated, and the estimation result varied more widely under the influence of a threshpassed of noise after a estimation process with the single phase difference. Despite a complication of the estimation process, the estimation result could not be so high accuracy. And the complication of the estimation process made a processing speed very slow.

A feature of the invention is to provide a point positioning apparatus and method that estimates the receiver's position with a high accuracy and without the complication of the processing.

The objects underlying the present invention are achieved by a point positioning apparatus according to independent claim 1 as well as by a point positioning method according to independent claim 6. Preferred embodiments of the respective apparatus and method are within the scope of the respective dependent claims.

A point positioning apparatus of the invention estimates the distances between the receiver and the satellites respectively and estimates the receiver's position by utilizing these distances. A point positioning apparatus includes a satellite data observing device, an ionosphere data getting device, a troposphere data getting device, and a position estimating device. The satellite data observing device observes the orbits and the errors of the respective satellites by use of the navigation messages contained in the satellite signals or the values have been estimated off-line. The ionosphere data getting device gets the delay data of the ionosphere. The troposphere data getting device gets the delay data of the troposphere. The position estimating device estimates the receiver's position at least by means of applying a parameter estimation algorithm to a regression equation. The regression equation is comprised of the explanatory variables and the objective variables. The explanatory variables are an unknown values including of the receiver's position that calculated by a linear approximation utilizing previous estimation results and the orbits data of the satellites, an integer ambiguity, a clock error of the receiver, the clock errors of the satellites, the delays of the ionosphere, and the delays of the troposphere. The objective variables are the observable values including the carrier phases, the code pseudoranges, the clock errors of the satellites included in the navigation message, the delay data of the ionosphere, and the delay data of the troposphere.

A point positioning method of the invention estimates the distances between the receiver and the satellites respectively and estimates the receiver's position by utilizing these distances. A point positioning method includes a satellite data observing process, an ionosphere data getting process, a troposphere data getting process, and a position estimating process. The satellite data observing process is an observation of the orbits and the errors of the respective satellites by use of the navigation messages contained in the satellite signals or the values have been estimated off-line. The ionosphere data getting process is an acquisition of the delay data of the ionosphere. The troposphere data getting process is an acquisition of the delay data of the troposphere. The position estimating process is an estimation of the receiver's position at least by means of applying a parameter estimation algorithm to a regression equation. The regression equation is comprised of the explanatory variables and the objective variables. The explanatory variables are an unknown values including of the receiver's position that calculated by a linear approximation utilizing previous estimation results and the orbits data of the satellites, an integer ambiguity, a clock error of the receiver, the clock errors of the satellites, the delays of the ionosphere, and the delays of the troposphere. The objective variables are the observable values including of the carrier phase, the code pseudorange, the clock errors of the satellites included in the navigation message, the delay data of the ionosphere, and the delay data of the troposphere.

The point positioning apparatus and the positioning method set the carrier phases of every satellites and every carrier waves, the code pseudoranges of every satellites and every PN codes, the orbit data of every satellites, the clock error data of the every satellites, the delay data of the ionosphere, and the delay data of the troposphere as observable values. And the point positioning apparatus and point positioning method set the position of receiver in three dimensions, the clock error of the receiver, and the integer ambiguity of every carrier wave and every satellite as unknown value. The regression equation is composed of the observable values as objective variables and the unknown values as the explanatory variables. At this point, the receiver's position is linear estimated by the previous estimation results of the receiver's position and the orbit data of the every satellite. Applying the parameter estimation algorithm such as least-square method to a regression equation, the unknown values including at least the receiver's position could be estimated.

In an aspect of the invention, the point positioning apparatus and the point positioning method estimate the receiver's position by fixing the integer ambiguity with an integer ambiguity estimation method.

In this aspect, applying the integer ambiguity estimation method such as LAMBDA method to the integer ambiguity of the carrier phases, the integer ambiguity could be fixed as an integer value. By applying this fixed integer ambiguity to the regression equation, the amount of the unknown values could decrease and accuracy of the estimation result could improve.

In another aspect of the invention, the point positioning apparatus and the point positioning method memorize the carrier phases of every satellites, the code pseudoranges of every satellites, the clock error of the receiver, the orbit data of every satellites, the clock errors of every satellites, the delay data of the ionosphere, the delay date of the troposphere over the number of epochs.

In this aspect, getting the data over the number of epochs, the amount of the observable values and the unknown values would increase. But the amount of the observable values is more than one of the unknown values, so the unknown values of the regression equation could be estimated easier.

In another aspect of the invention, the point positioning apparatus and the point positioning method applies a state estimation algorithm to the regression equation.

In this aspect, applying the state estimation algorithm such as the Kalmann Filter and a nonlinear Filter to the regression equation described above, a position could be estimated while the receiver is moving.

In another aspect of the invention, the point positioning apparatus and the point positioning method add the orbit data of every satellites as the objective variable and the errors of the satellite's orbits as the explanatory variable into the regression equation. By using this regression equation the positioning apparatus and the positioning method estimates the receiver's position.

In this aspect of the invention, applying the error of the satellite's orbit which is related to a satellite's position as unknown value to the explanatory variable.

According to this invention, the estimation accuracy of the receiver's position and the integer ambiguity is high by utilizing the regression equation which comprising the delay data of the ionosphere, the delay data of the troposphere, the orbit data of the satellites, the clock error of the satellites, the carrier phases, the code pseudoranges as observational value, and the receiver's position, the integer ambiguity as unknown value. Accordingly, utilizing the easy estimation such as only one regression equation, the point position of the receiver is estimated with high accuracy.

In another aspect of the invention, applying the integer ambiguity estimation method such as LAMBDA method, estimating of the point position of the receiver has higher accuracy.

In another aspect of the invention, utilizing the observational variables over the number of epochs, the required number of the observational satellites is reduced and estimating the point position of the receiver has high accuracy.

In another aspect of the invention, applying the state estimation algorithm such as the Kalmann Filter, estimating the point position of the receiver which is moving has high accuracy.

In another aspect of the invention, utilizing the estimation equation comprising of the orbit data of the satellites as the observable value and the error of the satellite's orbit, the distance between the receiver and the satellites could be estimated with high accuracy. Accordingly, the receiver's position could be estimated with very high accuracy.

BRIEF DESCRIPTION OF THE DRAWINGS

[FIG. 1] FIG. 1 is a block diagram illustrating an embodiment of the point positioning apparatus.
[FIG. 2] FIG. 2 is a flowchart illustrating an estimation process of a positioning system composed of the point positioning apparatus and a GPS receiver.
[FIG. 3] FIG. 3 is a scatter diagram of the receiver's position with an embodiment of the point positioning method.
[FIG. 4] FIG. 4 is a diagram of the receiver's ellipsoid height with an embodiment of the point positioning method.

Explanation of Reference Numbers

**[0022]**

10 point positioning apparatus
11 a navigation message analysis device
12 a satellite information processing device
13 a point position operating device
20 a GPS antenna
30 a GPS receiver

THE BEST MODE FOR CARRYING OUT THE INVENTION

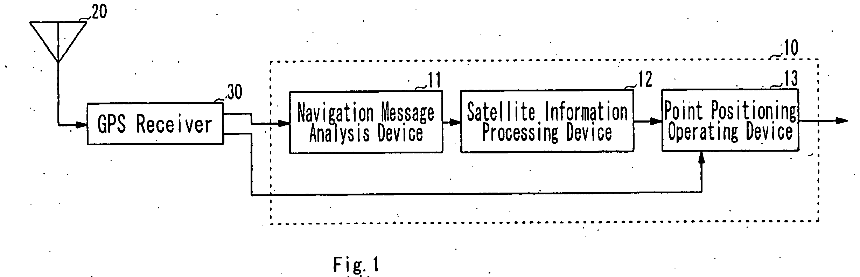

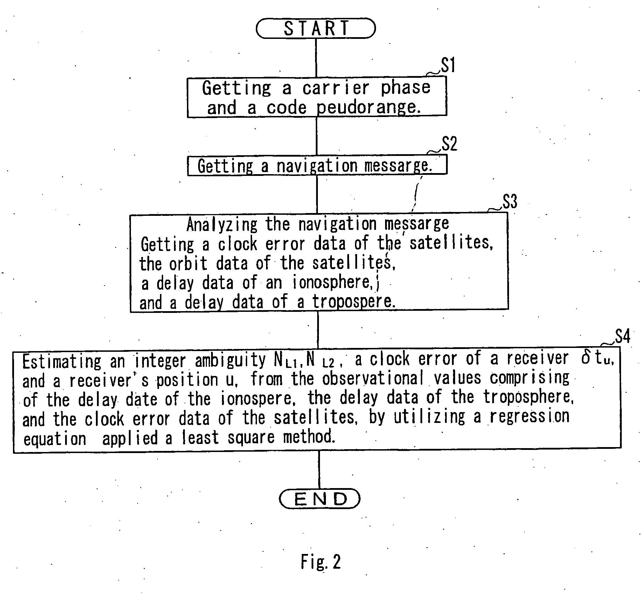

With reference to the accompanying drawings, an embodiment of the invention which is a point positioning apparatus will be described below. The following explanation of an embodiment explains GPS (Global Positioning System), but can apply to other all GNSS (Global Navigation Satellite System) . Figure 1 is a block diagram illustrating an embodiment of the point positioning apparatus. Figure 2 is a flowchart illustrating an estimation process of a positioning system composed of the point positioning apparatus and a GPS receiver.

As shown FIG.1, the point positioning apparatus connects to the GPS receiver 30, and includes a navigation message analysis device 11, a satellite information processing device 12, and a point position operating device 13.

The GPS receiver 30 connects to a antenna, and gets a L1 carrier phases, a L2 carrier phases, a pseudorange based on the C/A code, a pseudorange based on the P(Y) code, and a navigation message on L1 carrier by known method from the GPS satellite (S1, S2) . The GPS receiver 30 outputs the navigation massage to the navigation massage analysis device 11. The GPS receiver 30 outputs the carrier phase and the code pseudorange (the pseudorange based on the C/A code and the pseudorange based on the P(Y) code) to the point position operating device 13.

The navigation message analysis device 11 gets a delay data of the ionosphere, the clock errors of the respective satellites, and the ephemeris data of the respective satellites by analyzing the navigation message inputted from the GPS receiver 30. The navigation message analysis device 11 gets a data of a troposphere by using the mathematical model. And the navigation message analysis device 11 outputs the each data to the satellite information processing device 12.

In reference to the ephemeris data , the satellite information processing device 12 chooses the GPS satellites utilized for estimating a receiver's position. The satellite information processing device 12 outputs to the chosen data. These chosen data have the ephemeris data, the clock delay of the satellite, the delay data of the ionosphere, and the delay data of the troposphere concerned with the chosen GPS satellites respectively (S3).

The point position operating device 13 formulates the observed positioning data consisting of the L1 carrier phase, the L2 carrier phase, the pseudorange based on the C/A code, the pseudorange based on the P(Y) code, the ephemeris data, a clock error of the GPS satellite, the delay data of the ionosphere, the delay data of the troposphere by a liner regression equation to described below. Applying a least-square method that is a kind of a parameter estimation algorithm to this linear regression equation, the point position operating device 13 estimates the receiver's position, an integer ambiguity NL1 of the L1 carrier wave, an integer ambiguity NL2 of the L2 carrier wave (S4) . This estimation processing should be repeated until an error of the estimation result drops blow a predetermined threshpassed. When the error of the estimation result drops below the predetermined threshpassed, the estimation result of the receiver's position is outputted as an estimated receiver's position.

The navigation message analysis device 11, the satellite information processing device 12, and the point position operating device 13 are comprised of an arithmetic logical unit like a microprocessor which operates the algorithm described below. And these devices are comprised of the arithmetic logical units respectively or are comprised of the only arithmetic logical unit.

Next described below is a minute detail relating to an estimation algorithm which estimates the integer ambiguity of L1 carrier wave, the integer ambiguity of L2 carrier wave, and the receiver's position.

Generally an observation equation of a carrier phase $\varphi_{pL, u}$ is described by an expression (1), and an observation equation of a code pseudorange $\rho_{pc,u}$ is described by an equation (2), where u is receiver, p is a satellite number (observable), L is a kind of a carrier wave, c is a kind of code. Meanwhile, an error of a multipath is too small to be ignored.

$$\varphi_{L,u}^{p}(t) = \frac{1}{\lambda_{L}}\left\{ r_{u}^{p}(t, t - \tau_{u}^{p}) - \delta I_{u}^{p}(t) + \delta T_{u}^{p}(t) + c\left[\delta t_{u}(t) - \delta t^{p}(t - \tau_{u}^{p})\right]\right\} + N_{L,u}^{p} + \varepsilon_{L,u}^{p}(t) \quad -(1)$$

$$\rho_{c,u}^{P}(t) = r_{u}^{P}(t, t - \tau_{u}^{P}) + \delta I_{u}^{P}(t) + \delta T_{u}^{P}(t) + c\left[\delta t_{u}(t) - \delta t^{P}(t - \tau_{u}^{P})\right] + e_{c,u}^{P}(t) \quad -(2)$$

[Expression 1]

where $\lambda L$ is a wavelength of L carrier wave, $r_{pu}(t, t-\tau_{pu})$ is the geometric distance between the receiver u at the time t and the satellite p at the time $t-\tau_{pu}$. Thus $\tau_{pu}$ denotes the travel time from the satellite p to the receiver u. And where $\delta I_{pu}(t)$ is the delay of the ionosphere to the L1 carrier wave, $\delta T_{pu}(t)$ is the delay of the troposphere to the L1 and L2 carrier wave. $\delta t_u(t)$ is a clock error of receiver u in rue time t, $\delta t_p(t-\tau_{pu})$ is a clock error of GPS satellite p by time $(t-\tau_{pu})$. $N_{pL,u}$ is the integer ambiguity concerned with a distance between the receiver u and the GPS satellite p, $\varepsilon p_{L,u}(t)$, $e_{pL,u}(t)$ are the observation noise respectively.

Therefore the observation equation of the L1 carrier phase $\varphi_{pL1,u}$ is described by an expression (3), and the observation equation of L2 carrier phase $\varphi_{pL2,u}$ is described by an expression (4).

$$\varphi_{L1,u}^{P}(t) = \frac{1}{\lambda_{L1}}\left\{ r_u^P(t, t-\tau_u^P) - \delta I_u^P(t) + \delta T_u^P(t) + c\left[\delta t_u(t) - \delta t^P(t-\tau_u^P)\right]\right\} + N_{L1,u}^P + \varepsilon_{L1,u}^P(t) \qquad -(3)$$

$$\varphi_{L2,u}^{P}(t) = \frac{1}{\lambda_{L2}}\left\{ r_u^P(t, t-\tau_u^P) - \frac{f_{L1}^2}{f_{L2}^2}\delta I_u^P(t) + \delta T_u^P(t) + c\left[\delta t_u(t) - \delta t^P(t-\tau_u^P)\right]\right\}$$
$$+ N_{L2,u}^P + \varepsilon_{L2,u}^P(t) \qquad -(4)$$

[ Expression 2 ]

where fL1 is a central frequency of the L1 carrier wave, fL2 is a central frequency of the L2 carrier wave.
Furthermore, the L1 carrier phase $\varphi_{pL1,u}$ and the L2 carrier phase $\varphi_{pL2,u}$ are described by an expression (3'), (4') respectively.
$$\Phi_{L1,u}^{P}(t) \equiv \lambda_{L1}\varphi_{L1,u}^{P}(t)$$
$$= r_u^P(t, t-\tau_u^P) - \delta I_u^P(t) + \delta T_u^P(t) + c\left[\delta t_u(t) - \delta t^P(t-\tau_u^P)\right] + \lambda_{L1}N_{L1,u}^P + \lambda_{L1}\varepsilon_{L1,u}^P(t) \qquad -(3')$$

$$\Phi_{L2,u}^{P} \equiv \lambda_{L2}\varphi_{L2,u}^{P}(t)$$
$$= r_u^P(t, t-\tau_u^P) - \frac{f_{L1}^2}{f_{L2}^2}\delta I_u^P(t) + \delta T_u^P(t) + c\left[\delta t_u(t) - \delta t^P(t-\tau_u^P)\right] + \lambda_{L2}N_{L2,u}^P + \lambda_{L2}\varepsilon_{L2,u}^P(t) \qquad -(4')$$

[ Expression 3 ]

The observation equation of the C/A code pseudorange $\rho_{pCA,u}$ is described by an expression (5), and the observation equation of P code $\rho_{pP,u}$ is described by an expression (6).
$$\rho_{CA,u}^{P}(t) = r_u^P(t, t-\tau_u^P) + \delta I_u^P(t) + \delta T_u^P(t) + c\left[\delta t_u(t) - \delta t^P(t-\tau_u^P)\right] + e_{CA,u}^P(t) \qquad -(5)$$

$$\rho_{P,u}^{P}(t) = r_u^P(t, t-\tau_u^P) + \frac{f_{L1}^2}{f_{L2}^2}\delta I_u^P(t) + \delta T_u^P(t) + c\left[\delta t_u(t) - \delta t^P(t-\tau_u^P)\right] + e_{P,u}^P(t) \qquad -(6)$$

[Expression 4]

At this point the geometric distance $r_{pu}(t, t-\tau_{pu})$ is described by an expression (7).
$$r_u^p(t) = r_u^p(t, t - \tau_u^p)$$
$$= \sqrt{(x_u(t) - x^p(t - \tau_u^p))^2 + (y_u(t) - y^p(t - \tau_u^p))^2 + (z_u(t) - z^p(t - \tau_u^p))^2} \quad - (7)$$

[ Expression 5 ]

Next, we apply a Linear Taylor series expansion to an unknown receiver's position u(t) with a priori estimation of the receiver's position $u_{(j)}$(t), and apply a linear approximation to the geometric distance $r_{pu}$(t), then a following equation ( an expression (9) ) should be derived mathematically. At this point u(t) and $u_{(j)}$(t) are defined by an following definitional equation respectively. $u(t) \equiv [ x_u(t), y_u(t), z_u(t) ]^T$, $u^{(j)}(t) \equiv [ x_u^{(j)}(t), y_u^{(j)}(t), z_u^{(j)}(t) ]^T$.

$$r_u^p \cong r_{u(j)}^p + \left[\frac{\delta r_u^p}{\delta u}\right]_{u=u(j)}^T (u - u^{(j)}) \quad - (8)$$

p=1,2,...,$n_s$

where

$$g^{p,(j)} \equiv \left[\frac{\delta r_{u^{(j)}}^p}{\delta u^{(j)}}\right]^T \quad - (9)$$

p=1,2,...,$n_s$

[ Expression 6 ]

By this expression (9), the expression (3'), (4'), (5), (6) are re-described to the following expression (10),(11),(12),(13) respectively.

$$\Phi_{L1,u}^{p,(j)} = r_{u(j)}^p + g^{p,(j)}(u - u^{(j)}) - \delta I_u^p + \delta T_u^p + c(\delta t_u - \delta t^p) + \lambda_{L1} N_{L1,u}^p + \lambda_{L1} \varepsilon_{L1,u}^p \quad - (10)$$

$$\Phi_{L2,u}^{p,(j)} = r_{u(j)}^p + g^{p,(j)}(u - u^{(j)}) - \frac{f_{L1}^2}{f_{L2}^2}\delta I_u^p + \delta T_u^p + c(\delta t_u - \delta t^p) + \lambda_{L2} N_{L2,u}^p + \lambda_{L2} \varepsilon_{L2,u}^p \quad - (11)$$

$$\rho_{CA,u}^{p,(j)} = r_{u(j)}^p + g^{p,(j)}(u - u^{(j)}) + \delta I_u^p + \delta T_u^p + c(\delta t_u - \delta t^p) + e_{CA,u}^p \quad - (12)$$

$$\rho_{P,u}^{p,(j)} = r_{u(j)}^p + g^{p,(j)}(u - u^{(j)}) + \frac{f_{L1}^2}{f_{L2}^2}\delta I_u^p + \delta T_u^p + c(\delta t_u - \delta t^p) + e_{P,u}^p \quad - (13)$$

[ Expression 7 ]

At this point, a L1 carrier phase $\Phi e^{p,(j)}{}_{L1,u}$, a L2 carrier phase $\Phi e^{p,(j)}{}_{L2,u}$, a C/A code pseudorange $\rho e^{p,(j)}{}_{CA,u}$, a P code pseudorange $\rho e^{p,(j)}{}_{P,u}$ are defined by the following expression (14), (15), (16), (17) respectively.

$$\Phi e_{L1,u}^{p,(j)} \cong \Phi_{L1,u}^{p,(j)} - (r_{u(i)}^{p} - g^{p,(j)}u^{(j)}) \quad -(14)$$

$$\Phi e_{L2,u}^{p,(j)} \cong \Phi_{L2,u}^{p,(j)} - (r_{u(i)}^{p} - g^{p,(j)}u^{(j)}) \quad -(15)$$

$$\rho e_{CA,u}^{p,(j)} \cong \rho_{CA,u}^{p,(j)} - r_{u(i)}^{p} + g^{p,(j)}u^{(j)} \quad -(16)$$

$$\rho e_{P,u}^{p,(j)} \cong \rho_{P,u}^{p,(j)} - r_{u(i)}^{p} + g^{p,(j)}u^{(j)} \quad -(17)$$

[ Expression 8 ]

By these expressions, the expression (10), (11), (12), (13) are re-described to the following expression (18), (19), (20), (21) respectively.

$$\Phi e_{L1,u}^{p,(j)} \cong g^{p,(j)}u - \delta I_{u}^{p} + \delta T_{u}^{p} + c(\delta t_{u} - \delta t^{p}) + \lambda_{L1}N_{L1,u}^{p} + \lambda_{L1}\varepsilon_{L1,u}^{p} \quad -(18)$$

$$\Phi e_{L2,u}^{p,(j)} \cong g^{p,(j)}u - \frac{f_{L1}^{2}}{f_{L2}^{2}}\delta I_{u}^{p} + \delta T_{u}^{p} + c(\delta t_{u} - \delta t^{p}) + \lambda_{L2}N_{L2,u}^{p} + \lambda_{L2}\varepsilon_{L2,u}^{p} \quad -(19)$$

$$\rho e_{CA,u}^{p,(j)} \cong g^{p,(j)}u + \delta I_{u}^{p} + \delta T_{u}^{p} + c[\delta t_{u} - \delta t^{p}] + e_{CA,u}^{p} \quad -(20)$$

$$\rho e_{P,u}^{p,(j)} \cong g^{p,(j)}u + \frac{f_{1}^{2}}{f_{2}^{2}}\delta I_{u}^{p} + \delta T_{u}^{p} + c[\delta t_{u} - \delta t^{p}] + e_{P,u}^{p} \quad -(21)$$

[ Expression 9 ]

This equation denotes the approximate linear regression equation that is comprised of some explanatory variables and some objective variables. The objective variables are comprised of the carrier phases and the code pseudoranges. The explanatory variables are comprised of the receiver's position, the delay of the ionosphere, the delay of the troposphere, the integer ambiguity, and the measurement error.

Define a matrix $G^{(j)}$ as an expression (22) here.

$$G^{(j)} \equiv \begin{bmatrix} g^{1,(j)} \\ g^{2,(j)} \\ \cdot \\ g^{n_s,(j)} \end{bmatrix} \quad -(22)$$

[ Expression 10 ]

And a matrix $G^{(j)}_{u}$ is defined as an expression (23).

$$G_u^{(j)} = \begin{bmatrix} \dfrac{\delta r_{u^{(j)}}^1}{\delta x_u^{(j)}} & \dfrac{\delta r_{u^{(j)}}^1}{\delta y_u^{(j)}} & \dfrac{\delta r_{u^{(j)}}^1}{\delta z_u^{(j)}} \\[3mm] \dfrac{\delta r_{u^{(j)}}^2}{\delta x_u^{(j)}} & \dfrac{\delta r_{u^{(j)}}^2}{\delta y_u^{(j)}} & \dfrac{\delta r_{u^{(j)}}^2}{\delta z_u^{(j)}} \\[3mm] \vdots & \vdots & \vdots \\[1mm] \dfrac{\delta r_{u^{(j)}}^{n_s}}{\delta x_u^{(j)}} & \dfrac{\delta r_{u^{(j)}}^{n_s}}{\delta y_u^{(j)}} & \dfrac{\delta r_{u^{(j)}}^{n_s}}{\delta z_u^{(j)}} \end{bmatrix} \qquad - (23)$$

$$\frac{\delta r_{u^{(j)}}^P}{\delta x_u^{(j)}} = \frac{(x_u^{(j)} - x^P)}{r_{u^{(j)}}^P}, \qquad \frac{\delta r_{u^{(j)}}^P}{\delta y_u^{(j)}} = \frac{(y_u^{(j)} - y^P)}{r_{u^{(j)}}^P}, \qquad \frac{\delta r_{u^{(j)}}^P}{\delta z_u^{(j)}} = \frac{(z_u^{(j)} - z^P)}{r_{u^{(j)}}^P}$$

$$(p = 1, 2, \cdots, n_s)$$

[ Expression 11 ]

Additionally define the L1 carrier phase $\Phi e^{p,(j)}_{L1,u}$, the L2 carrier phase $\Phi e^{p,(j)}_{L2,u}$, the C/A code pseudorange $\rho e^{p,(j)}_{CA,u}$, the P code pseudorange $\rho e^{p,(j)}_{P,u}$ as an expression (24) in matrix.

$$\Phi e_{L1,u}^{(j)} \equiv \begin{bmatrix} \Phi e_{L1,u}^{1,(j)} \\ \vdots \\ \Phi e_{L1,u}^{n_s,(j)} \end{bmatrix}, \Phi e_{L2,u}^{(j)} \equiv \begin{bmatrix} \Phi e_{L2,u}^{1,(j)} \\ \vdots \\ \Phi e_{L2,u}^{n_s,(j)} \end{bmatrix}, \rho e_{CA,u}^{(j)} \equiv \begin{bmatrix} \rho e_{CA,u}^{1,(j)} \\ \vdots \\ \rho e_{CA,u}^{n_s,(j)} \end{bmatrix}, \rho e_{P,u}^{(j)} \equiv \begin{bmatrix} \rho e_{P,u}^{1,(j)} \\ \vdots \\ \rho e_{P,u}^{n_s,(j)} \end{bmatrix} \qquad - (24)$$

[ Expression 12 ]

By these expressions (22), (23), (24), the expression (18), (19), (20), (21) are re-described to the following expression (25) in a vector-matrix.

$$\begin{bmatrix} \Phi e_{L1,u}^{(j)} \\ \Phi e_{L2,u}^{(j)} \\ \rho e_{CA,u}^{(j)} \\ \rho e_{P,u}^{(j)} \end{bmatrix} = \begin{bmatrix} G_u^{(j)} & 1 & -I & -I & I & I & 0 \\ G_u^{(j)} & 1 & -I & -\dfrac{f_{L1}^2}{f_{L2}^2}I & I & 0 & I \\ G_u^{(j)} & 1 & -I & I & I & 0 & 0 \\ G_u^{(j)} & 1 & -I & \dfrac{f_{L1}^2}{f_{L2}^2}I & I & 0 & 0 \end{bmatrix} \begin{bmatrix} u \\ c\delta t_u \\ c\delta t^P \\ \delta I_u \\ \delta T_u \\ \lambda_{L1} N_{L1,u} \\ \lambda_{L2} N_{L2,u} \end{bmatrix} + \begin{bmatrix} \lambda_{L1}\varepsilon_{L1,u}^P \\ \lambda_{L2}\varepsilon_{L2,u}^P \\ e_{CA,u}^P \\ e_{P,u}^P \end{bmatrix} \qquad - (25)$$

[ Expression 13 ]

or,

$$y_u^{(j)} = H^{(j)} \theta_u + \upsilon_u \quad -(26)$$

$$y_u^{(j)} \equiv \begin{bmatrix} \Phi e_{L1,u}^{(j)} & \Phi e_{L2,u}^{(j)} & \rho e_{CA,u}^{(j)} & \rho e_{P,u}^{(j)} \end{bmatrix}^T \quad -(27)$$

$$H_u^{(j)} \equiv \begin{bmatrix} G_u^{(j)} & 1 & -1 & -1 & 1 & 1 & 0 \\ G_u^{(j)} & 1 & -1 & -\frac{f_{L1}^2}{f_{L2}^2}1 & 1 & 0 & 1 \\ G_u^{(j)} & 1 & -1 & 1 & 1 & 0 & 0 \\ G_u^{(j)} & 1 & -1 & \frac{f_{L1}^2}{f_{L2}^2}1 & 1 & 0 & 0 \end{bmatrix} \quad -(28)$$

$$\theta_u \equiv \begin{bmatrix} u & c\delta t_u & c\delta t^P & \delta I_u & \delta T_u & \lambda_{L1}N_{L1,u} & \lambda_{L2}N_{L2,u} \end{bmatrix}^T \quad -(29)$$

$$\upsilon_u \equiv \begin{bmatrix} \lambda_{L1}\varepsilon_{L1,u}^P & \lambda_{L2}\varepsilon_{L2,u}^P & e_{CA,u}^P & e_{P,u}^P \end{bmatrix}^T \quad -(30)$$

[ Expression 14 ]

And now, described above, the navigation message includes the clock errors of each GPS satellite, so the navigation message analysis device 11 gets the clock errors of each GPS satellite from the navigation message. An observable value of these clock errors of the GPS satellites $\delta te^P$ is described by a following expression, and could be added to the regression equation described above.
$$\delta te^P = \begin{bmatrix} 0 & 0 & 1_{n_s} & 0 & 0 & 0 & 0 \end{bmatrix} \beta_u + e_{\delta t^P}$$

[ Expression 15 ]

Additionally, the delay of the ionosphere and the delay of the troposphere could be calculated from some kind of the GPS satellite information on the navigation message, applying one mathematical model calculates the delay data of the ionosphere and another mathematical model calculates the delay data of the troposphere. An observable value of the delay data of the ionosphere $\delta Ie_u$ and an observable of the delay data of the troposphere $\delta Te_u$ are described by following expressions respectively, and could be added to the regression equation described above.
$$\delta Ie_u = \begin{bmatrix} 0 & 0 & 0 & 1_{n_s} & 0 & 0 & 0 \end{bmatrix} \beta_u + e_{\delta Iu}$$

$$\delta Te_u = \begin{bmatrix} 0 & 0 & 0 & 0 & 1_{n_s} & 0 & 0 \end{bmatrix} \beta_u + e_{\delta Tu}$$

[ Expression 16 ]

As a result, the objective variable of this linear regression equation, which is comprised of the carrier phase, the code pseudorange, the clock errors of the GPS satellites, the delay data of the ionosphere, and the delay data of the troposphere, is the observable value. And the explanatory variable of this linear regression equation, which includes the integer ambiguity and the receiver's position, is the unknown value.

Namely, the regression equation described by the expression (26) re-described by the following expressions (31), (32), (33), (34).

$$y_{u,E}^{(j)} = H_E^{(j)} \theta_u + \upsilon_{u,E} \quad -(31)$$

$$y_{u,E}^{(j)} \cong \begin{bmatrix} \Phi e_{L1,\mu}^{(j)} & \Phi e_{L2,\mu}^{(j)} & \rho e_{CA,\mu}^{(j)} & \rho e_{P,\mu}^{(j)} & \delta t e^P & \delta I e_u & \delta T e_u \end{bmatrix}^T \quad -(32)$$

$$H_E^{(j)} \cong \begin{bmatrix} G_u^{(j)} & 1 & -I & -I & I & I & 0 \\ G_u^{(j)} & 1 & -I & -\dfrac{f_{L1}^2}{f_{L2}^2}I & I & 0 & I \\ G_u^{(j)} & 1 & -I & I & I & 0 & 0 \\ G_u^{(j)} & 1 & -I & \dfrac{f_{L1}^2}{f_{L2}^2}I & I & 0 & 0 \\ 0 & 0 & I & 0 & 0 & 0 & 0 \\ 0 & 0 & 0 & I & 0 & 0 & 0 \\ 0 & 0 & 0 & 0 & I & 0 & 0 \end{bmatrix} \quad -(33)$$

$$\upsilon_{u,E} \cong \begin{bmatrix} \lambda_{L1}\varepsilon_{L1,\mu}^P & \lambda_{L2}\varepsilon_{L2,\mu}^P & e_{CA,\mu}^P & e_{P,\mu}^P & e_{\delta t^P} & e_{\delta I_u} & c_{\delta Tu} \end{bmatrix}^T \quad -(34)$$

[ Expression 17 ]

where $y_{u,E}^{(j)}$ is a vector-matrix of the objective variable, $H_E^{(j)}$ is a calculating matrix, $\theta_u$ is a vector-matrix of the explanatory variable, and $\upsilon_{u,E}$ is a vector-matrix of the error.

At this point, a covariance matrix of the error R based on the vector-matrix of the error $\upsilon_{u,E}$ is defined by a following expression (35).

$$R \equiv Cov[\upsilon_{u,E}] = \begin{bmatrix} \sigma_{\Phi 1}^2 I_{n_s} & 0 & 0 & 0 & 0 & 0 & 0 \\ 0 & \sigma_{\Phi 2}^2 I_{n_s} & 0 & 0 & 0 & 0 & 0 \\ 0 & 0 & \sigma_{CA}^2 I_{n_s} & 0 & 0 & 0 & 0 \\ 0 & 0 & 0 & \sigma_P^2 I_{n_s} & 0 & 0 & 0 \\ 0 & 0 & 0 & 0 & \sigma_{\delta t^p}^2 I_{n_s} & 0 & 0 \\ 0 & 0 & 0 & 0 & 0 & \sigma_{\delta I_s}^2 I_{n_s} & 0 \\ 0 & 0 & 0 & 0 & 0 & 0 & \sigma_{\delta T_s}^2 I_{n_s} \end{bmatrix}$$

$$- (35)$$

where

$$\sigma_{\Phi 1}^2 \equiv \lambda_{L1}^2 \sigma_{L1}^2, \sigma_{\Phi 2}^2 \equiv \lambda_{L2}^2 \sigma_{L2}^2$$

[ Expression 18 ]

Therefore, the estimated explanatory variable $\theta e^{(j+1)}$ which is a estimation of the explanatory variable $\theta^{(j+1)}$ is defined by a following expression (36).

$$\theta e^{(j+1)} = \left\{ [H_E^{(j)}]^T R^{-1} [H_E^{(j)}] \right\}^{-1} [H_E^{(j)}]^T R^{-1} y_{u,E}^{(j)} \quad - (36)$$

[ Expression 19 ]

Additionally a variance of the estimated explanatory variable $\theta e^{(j+1)}$ is defined by an following expression (37).

$$Cov[\theta e^{(j+1)}] \equiv E[(\theta e^{(j+1)} - \theta)(\theta e^{(j+1)} - \theta)^T] = \left[ [H_E^{(j)}]^T R^{-1} [H_E^{(j)}] \right]^{-1} \quad - (37)$$

[ Expression 20 ]

As a reference to the calculated result of this expression (36), and applying a least-square method, the linear regression equation described above is calculated repeatedly. And the unknown values composing the explanatory variable $\theta$ converge, then the estimated values is determined by the converged values. At this point, a convergence condition of the unknown values composing the explanatory variable $\theta$ is what the variation (error) caused in the repeated calculation of estimating the unknown values drops blow the predetermined threshpassed. And then under this condition the estimation values composing the explanatory variable $\theta$ are determined. Utilizing the estimation operation described above, the integer ambiguity of L1 carrier wave $N_{L1}$, the integer ambiguity of L2 carrier wave $N_{L2}$, and the receiver's position could be estimated.

And according to the present embodiment, the integer ambiguity of L1 carrier wave NL1, the integer ambiguity of L2 carrier wave, and the receiver's position could be estimated without the estimation operation utilizing the single difference. As a consequence, we could estimate the point position of the receiver by using easier algorithm than the conventional one, and make an operation speed of the point positioning faster.

At this time using the estimation operation described above, the unknown values are the components of the explanatory variables $\theta_u$, and specifically the regression equation described by an expression (31) has some unknown parameters. The number of the unknown parameters is 3 in the receiver's position u, 1 in the clock error of the receiver $\delta t_u$, $n_s$ ( equal to the number of the observable GPS satellite) in the clock errors of the GPS satellites $\delta t^p$, $n_s$ in the delay

of the ionosphere $\delta I$, $n_s$ in the delay of the troposphere $\delta T$, $n_s$ in the integer ambiguity of the L1 carrier wave, and $n_s$ in the integer ambiguity of the L2 carrier wave, an amount of the unknown values is $4+5*n_s$.

On the other hand, the observable values is composed of the L1 carrier phase $\Phi e^{(j)}_{L1,u}$, the L2 carrier phase $\Phi e^{(j)}_{L2,u}$, the C/A code pseudorange $\rho e^{(j)}_{CA,u}$, the P(Y) code pseudorange $\rho e^{(j)}_{P,u}$, the clock error data of the GPS satellite $\delta te^p$, the delay data of the ionosphere $\delta Ie$, and the delay data of the troposphere $\delta Te$. The number of these observable values are $n_s$ that is a number of the observable GPS satellites, and an amount of the observable values is $7*n_s$.

In consequence, a required condition to solve the unknown values of this regression equation is the number of the unknown values $4+5*n_s$ is equal or less than the number of the observable values $7*n_s$ as the following expression.

$4+5*n_s <= 7*n_s$

This means $n_s >= 2$.

More specifically, it could be only 2 satellite signals from the respective GPS satellites to estimate the point position of the receiver. However, if we apply the least-square method to this regression equation described above, the inverse matrix of the $H^{(i)}_E$ in the expression (33) must exist.

But when the number of the observable GPS satellites $n_s$ is 2, this inverse matrix must be a single matrix. And when the number of the observable GPS satellites $n_s$ is 3, it has a large possibility that this inverse matrix would be a single matrix. Under this condition we could not have the inverse matrix. So we could not solve the unknown values of the regression equation described above.

This embodiment of invention described above use P code to execute the estimation operation, but P(Y) code is a secret code, so observing the P code pseudorange is very difficult in fact. Under this condition the observable value derived from the P(Y) code ( include $n_s$ parameter) decreases, a required condition to solve the unknown values of this regression equation is following expression.

$4+5*n_s <= 6*n_s$

This means $n_s>=4$. So it could be at least 4 satellite signals from the respective GPS satellites to estimate the point position of the receiver.

Following section describes the result of a simulation which is operated by this embodiment which is operated by this embodiment of the point positioning method. This result of the simulation is operated without utilizing the P code for the estimation equation.

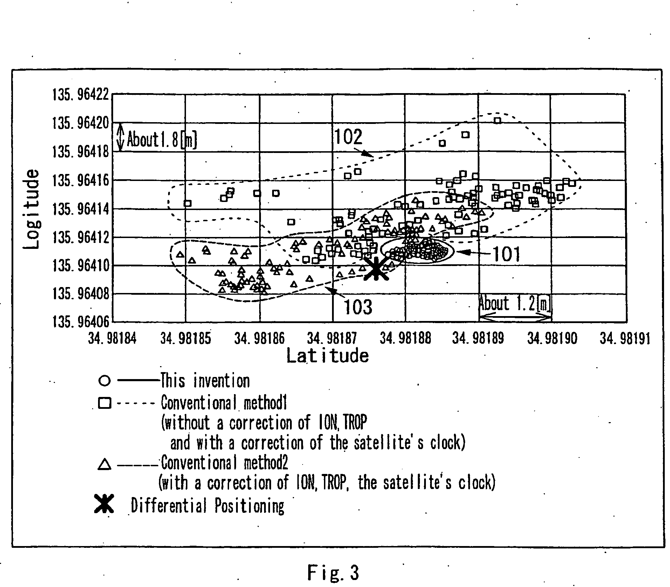

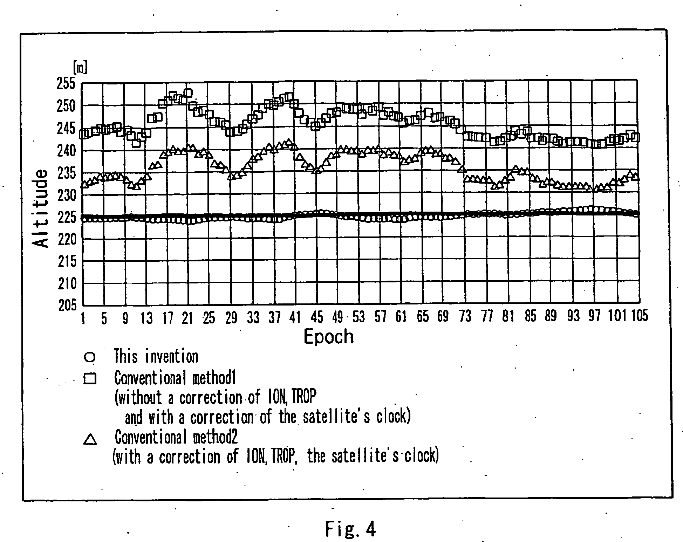

Figure 3 is a scatter diagram of the receiver's position with an embodiment of the point positioning method. The receiver's position is plotted in two dimensions, a longitude and a latitude. Figure 4 is a diagram of the receiver's ellipsoid height with an embodiment of the point positioning method.

A circuit plot shows an estimation result using this embodiment in figure 3, 4. And an area configured by a continuous line 101 contains all circle plots in figure 4. A quadrangle plot shows a consuetudinary estimation result only using the code pseudorange in figure 3,4 . And an area configured by a dotted line 102 contains almost quadrangle plots in figure 4. A triangle plot shows a consuetudinary estimation result using the code pseudorange, the delay data of the ionosphere, the delay data of the troposphere, and the clock error of the GPS satellite in figure 3,4 . And an area configured by dash line 103 contains almost triangle plots in figure 4. An asterisk plot in figure 3 and a continuous line in figure 4 show a relative positioning result.

And a table 1 shows an average and a standard deviation of the receiver's position ( the longitude, the latitude, and the ellipsoid height) estimated by the point positioning method described above. A table 2 shows an average and a standard deviation of the receiver's position ( the longitude, the latitude, and the ellipsoid height) estimated by the consuetudinary point positioning method only using the code pseudorange. A table 3 shows an average and a standard deviation of the receiver's position ( the longitude, the latitude, and the ellipsoid height) estimated by the consuetudinary point positioning method using the code pseudorange, the delay data of the ionosphere, the delay data of the troposphere, and the clock error of the GPS satellite.

In this simulation, an initial value of the receiver's position is given the coordinate value described in RINEX DATA " APPROXPOSITIONXYZ ". In addition, the delay data of the ionosphere is calculated applying what is called broadcasting model ( Klobuchar model) to the data related to the delay of the ionosphere included in the navigation message.

The delay data of the troposphere is calculated applying a GPS satellite's elevation angle figured from the navigation message to a following equation.

$$\delta Te = \frac{2.47}{\sin \xi + 0.0121} \quad [\,m\,]$$

[ Expression 21 ]

where $\xi$ is an elevation angle.

The respective variances ( $\sigma$ ) of the observation error are configured by 1.5 m at the code pseudorange, $\lambda$ /10+1.5/10 m at the carrier phase, 3.6 m at the clock error of GPS satellite, 7.0 m at the delay of the ionosphere, and 0.7 m at the delay of the troposphere. On this simulation which estimates the receiver's position applying the least-square method, a calculation of the receiver's position should be operated repeatedly until a norm of a shift of the estimated receiver's position bellows $1*10^{-3}$ m.

[ table 1 ]

|  | Latitude | Longitude | Ellipsoid Height |
|---|---|---|---|
| Average | 34. 98188223[° ] | 135. 9641106[° ] | 224. 93518 [° ] |
| Standard Deviation | 0. 195322465[m] | 0. 362454829[m] | 0. 526664731[m] |
| Differential Positioning | 34. 981876 [° ] | 135. 964098 [° ] | 224. 177 [° ] |

[ table 2 ]

|  | Latitude | Logitude | Ellipsoid Height |
|---|---|---|---|
| Average | 34. 98188284[° ] | 135. 9641387[° ] | 245. 547332 [° ] |
| Standard Deviation | 1. 419451503[m] | 1. 719274211[m] | 3. 161014416[m] |
| Differential Positioning | 34. 981876 [° ] | 135. 964098 [° ] | 224. 177 [° ] |

[ table 3 ]

|  | Latitude | Logitude | Ellipsoid Height |
|---|---|---|---|
| Average | 34. 98186963[° ] | 135. 9641115[° ] | 236. 1081403[° ] |
| Standard Deviation | 1. 347937297[m] | 1. 572959303[m] | 3. 184914299[m] |
| Differential Positioning | 34. 9811876 [° ] | 135. 964098 [° ] | 224. 177 [° ] |

According to these results, the receiver's position estimated by the method of point positioning described above could be estimated preciously.

As described above, we could estimate the point position of the receiver by using easier algorithm than the consuetudinary one, and the point position estimated by using this embodiment could be more precise than the consuetudinary one.

Thus applying the least-square method to the estimation operation, a LMBDA method using the variance estimated from an expression (37) should be applied.

Accordingly, the L1 integer ambiguity and the L2 integer ambiguity are fixed, and the receiver's position could be estimated more precisely.

And on this embodiment described above there is the point positioning method utilizing the observed value at only one epoch. But the point positioning method utilizing the observed values for some epochs could be considered. Utilizing this method the point positioning apparatus has a memory memorized the carrier phases, the code pseudoranges, the ephemeris data, the clock errors of the GPS satellites, the delay of the ionosphere, and the delay data of the troposphere for each GPS satellite for some epochs.

Utilizing the observed values for some epochs, for example utilizing only C/A code, the number of the observed values for K epochs is a following expression.

$$6*n_s*K=6K*n_s$$

On the other hand at a kinematic point positioning the number of the observing epoch is plural, so the number of the unknown values ( unknown parameters) except for the L1 integer ambiguity and the L2 integer ambiguity is increased in proportion to the number of the observing epochs. And the number of the unknown values is a following expression.
$$[0098] \quad 4+5*n_s+(K-1)(4+3n_s)$$

$$=4K+(3K+2)*n_s$$

Therefore, the requirement to resolve the regression equation applying the least- square method is a following equation.
$$6K*n_s>=4K+(3K+2)*n_s$$

$$(3K-2)*n_s>=4K$$

Namely,

$$n_s>=4K/(3K-2)$$

And in the case where the number of the epochs increases from 2 to infinity, calculating an integer available for us, the number $n_s$ of the GPS satellites is a following equation.
$$n_s>=2$$

Thus increasing the number of the satellites, we could operate the point positioning with observing at least 2 GPS satellites.
Furthermore applying the Kalmann Filter to the kinetic point positioning as described above, we could estimate the receiver's position more precisely. Next an estimation algorithm of the point positioning applied the Kalmann Filter is described below.
At first the expression (31) is re-described to a following expression (38) with using an observation time t corresponding to the order of epoch.
$$y_{u,E}^{(j)}(t) = H_E^{(j)}(t)\theta_u(t) + \upsilon_{u,E}(t) \quad -(38)$$
$$t = 1, 2, 3, \cdots$$

$$[ \text{ Expression 22 } ]$$

This expression (38) re-described to a following vector-matrix expression (39).
$$\begin{bmatrix} \Phi e^{(j)}_{L1,u}(t) \\ \Phi e^{(j)}_{L2,u}(t) \\ \rho e^{(j)}_{CA,u}(t) \\ \rho e^{(j)}_{P,u}(t) \\ c\delta te^{P}(t) \\ \delta Ie_{u}(t) \\ \delta Te_{u}(t) \end{bmatrix} = \begin{bmatrix} G^{(j)}_{u} & 1 & -1 & -1 & 1 & 1 & 0 \\ G^{(j)}_{u} & 1 & -1 & -\frac{f^2_{L1}}{f^2_{L2}}1 & 1 & 0 & 1 \\ G^{(j)}_{u} & 1 & -1 & 1 & 1 & 0 & 0 \\ G^{(j)}_{u} & 1 & -1 & \frac{f^2_{L1}}{f^2_{L2}}1 & 1 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \end{bmatrix} \begin{bmatrix} u(t) \\ c\delta t_{u}(t) \\ c\delta t^{P}(t) \\ \delta I_{u}(t) \\ \delta T_{u}(t) \\ \lambda_{L1}N_{L1,u} \\ \lambda_{L2}N_{L2,u} \end{bmatrix} + \begin{bmatrix} \lambda_{L1}\varepsilon_{L1,u}(t) \\ \lambda_{L2}\varepsilon_{L2,u}(t) \\ e_{CA,u}(t) \\ e_{P,u}(t) \\ e_{\delta t^P}(t) \\ e_{\delta I_u}(t) \\ e_{\delta T_u}(t) \end{bmatrix} - (39)$$

$$t = 1, 2, 3, \cdots$$

[ Expression 23 ]

At this point the clock error of the GPS satellite multiplied the speed of light c $\delta t^P$, the delay of the ionosphere $\delta I_u$, and the delay of the troposphere $\delta T_u$ are defined by an expression (40a), an expression (40b), an expression (40c) respectively.

$$c\delta t^{P}(t) = c\delta te^{P}(t) - e_{\delta t^P}(t) \quad - (40a)$$

$$\delta I_{u}(t) = \delta Ie_{u}(t) - e_{\delta I_u}(t) \quad - (40b)$$

$$\delta T_{u}(t) = \delta Te_{u}(t) - e_{\delta T_u}(t) \quad - (40c)$$

[ Expression 24 ]

These expression (40a-40c) are applied to the regression equation (39), furthermore, the observational vectors $y^{(j)}_{L1,u}(t)$, $y^{(j)}_{L2,u}(t)$, $y^{(j)}_{CA,u}(t)$, and $y^{(j)}_{P,u}(t)$ are defined by an following expression (41-44) respectively.

$$y^{(j)}_{L1,u}(t) = \Phi e^{(j)}_{L1,u}(t) + c\delta te^{P}(t) + \delta Ie_{u}(t) - \delta Te_{u}(t) \quad - (41)$$

$$y^{(j)}_{L2,u}(t) = \Phi e^{(j)}_{L2,u}(t) + c\delta te^{P}(t) + \frac{f^2_{L1}}{f^2_{L2}}\delta Ie_{u}(t) - \delta Te_{u}(t) \quad - (42)$$

$$y^{(j)}_{CA,u}(t) = \rho e^{(j)}_{L1,u}(t) + c\delta te^{P}(t) - \delta Ie_{u}(t) - \delta Te_{u}(t) \quad - (43)$$

$$y^{(j)}_{P,u}(t) = \rho e^{(j)}_{P,u}(t) + c\delta te^{P}(t) - \frac{f^2_{L1}}{f^2_{L2}}\delta Ie_{u}(t) - \delta Te_{u}(t) \quad - (44)$$

[ Expression 25 ]

A new regression equation is re-described to a following expression (45).
$$\begin{bmatrix} y^{(j)}_{L1,u}(t) \\ y^{(j)}_{L2,u}(t) \\ y^{(j)}_{CA,u}(t) \\ y^{(j)}_{P,u}(t) \end{bmatrix} = \begin{bmatrix} G^{(j)}_u(t) & 1 & 1 & 0 \\ G^{(j)}_u(t) & 1 & 0 & I \\ G^{(j)}_u(t) & 1 & 0 & 0 \\ G^{(j)}_u(t) & 1 & 0 & 0 \end{bmatrix} \begin{bmatrix} u(t) \\ c\delta t_u \\ \lambda_{L1} N_{L1,u} \\ \lambda_{L2} N_{L2,u} \end{bmatrix} + \begin{bmatrix} e_{\delta t_u}(t) + e_{\delta I_u}(t) - e_{\delta T_u}(t) + \lambda_{L1}\varepsilon_{L1,u} \\ e_{\delta t_u}(t) + \frac{f^2_{L1}}{f^2_{L2}} e_{\delta I_u}(t) - e_{\delta T_u}(t) + \lambda_{L2}\varepsilon_{L2,u} \\ e_{\delta t_u}(t) - e_{\delta I_u}(t) - e_{\delta T_u}(t) + e_{CA,u} \\ e_{\delta t_u}(t) - \frac{f^2_{L1}}{f^2_{L2}} e_{\delta I_u}(t) - e_{\delta T_u}(t) + e_{P,u} \end{bmatrix}$$

$$- (45)$$

[ Expression 26 ]

At this point the Markov process model of the velocity of an unknown receiver's position u (t) and a clock error of the receiver $c\delta t_u$(t) could be assumed, and a new state vector $\eta_{u(t)}$ is defined by an following expression (46).
$$\eta_u(t) = \begin{bmatrix} u(t) \\ v(t) \\ c\delta t_u \\ N_{L1,u} \\ N_{L2,u} \end{bmatrix} - (46)$$

[ Expression 27 ]

And for this state vector $\eta_{u(t)}$ a new state equation described by a following expression (47) is configured.
$$\eta_u(t+1) = A\eta_u(t) + Bw(t) \quad - (47)$$

[ Expression 28 ]

Additionally the observation equation described by the expression (45) re-describes to a following expression (48).
$$\begin{bmatrix} y^{(j)}_{L1,u}(t) \\ y^{(j)}_{L2,u}(t) \\ y^{(j)}_{CA,u}(t) \\ y^{(j)}_{P,u}(t) \end{bmatrix} = \begin{bmatrix} G^{(j)}_u(t) & 0 & 1 & \lambda_{L1}I & 0 \\ G^{(j)}_u(t) & 0 & 1 & 0 & \lambda_{L2}I \\ G^{(j)}_u(t) & 0 & 1 & 0 & 0 \\ G^{(j)}_u(t) & 0 & 1 & 0 & 0 \end{bmatrix} \begin{bmatrix} u(t) \\ v(t) \\ c\delta t_u \\ \lambda_{L1} N_{L1,u} \\ \lambda_{L2} N_{L2,u} \end{bmatrix} + \begin{bmatrix} e_{\delta t_u}(t) + e_{\delta I_u}(t) - e_{\delta T_u}(t) + \lambda_{L1}\varepsilon_{L1,u} \\ e_{\delta t_u}(t) + \frac{f^2_{L1}}{f^2_{L2}} e_{\delta I_u}(t) - e_{\delta T_u}(t) + \lambda_{L2}\varepsilon_{L2,u} \\ e_{\delta t_u}(t) - e_{\delta I_u}(t) - e_{\delta T_u}(t) + e_{CA,u} \\ e_{\delta t_u}(t) - \frac{f^2_{L1}}{f^2_{L2}} e_{\delta I_u}(t) - e_{\delta T_u}(t) + e_{P,u} \end{bmatrix}$$

$$- (48)$$

[ Expression 29 ]

This observation equation re-describes to an following vector-matrix expression (49).
$$y_{u,R}^{(j)}(t) = C_u^{(j)}(t)\eta_u(t) + \upsilon_{u,R}(t) \quad -(49)$$

$$t = 1, 2, \cdots$$

[ Expression 30 ]

Namely, it means these expression (47),(48),(49) constitute the Kalmann Filter. At this point the covariance matrix νu,R(t) could be configured as the expression (35) . And utilizing the state equation described by the expression (47) and the observation equation described by the expression (48), even if the receiver moves, the estimation of the receiver's position could be operated.
According to the embodiment described above, even if the receiver moves, we could estimate the receiver's position precisely with estimating the movement of the receiver by the Kalmann Filter.
Meanwhile, in the embodiment described above, a GPS satellite's position is not estimated. But utilizing a following method ( algorithm), the GPS satellite's position could be estimated.
At first the distance from the receiver to the GPS satellite is defined. And when both the GPS satellite's position and the receiver's position would be estimated, the linear approximation of the receiver's position could be described below.
$$\frac{\delta r_u^p}{\delta x_u} = \frac{(x_u - x^p)}{r_u^p}, \quad \frac{\delta r_u^p}{\delta y_u} = \frac{(y_u - y^p)}{r_u^p}, \quad \frac{\delta r_u^p}{\delta z_u} = \frac{(z_u - z^p)}{r_u^p}$$

$$( p = 1, 2, \cdots, n_s )$$

[ Expression 31 ]

The linear approximation of the GPS satellite's position could be described
$$\frac{\delta r_u^p}{\delta x^p} = -\frac{(x_u - x^p)}{r_u^p}, \quad \frac{\delta r_u^p}{\delta y^p} = -\frac{(y_u - y^p)}{r_u^p}, \quad \frac{\delta r_u^p}{\delta z^p} = -\frac{(z_u - z^p)}{r_u^p}$$

$$( p = 1, 2, \cdots, n_s )$$

[ Expression 32 ]

And when each satellite's position is defined as $s^p \equiv [ x^p, y^p, z^p ]^T$, following equation is effected.
$$\frac{\delta r_u^p}{\delta u} = -\frac{\delta r_u^p}{\delta s^p}$$

[ Expression 33 ]

Thus, an estimation value of the receiver's position u and the GPS satellite's position $s^p$ are approximated as a following expression (50) by the linear Taylor series expansion using the observation value of the receiver's position $u^{(j)}$ and the GPS satellite's position $s e^p$.

$$r_u^P \equiv r_{u(j)}^P + \left[\frac{\delta r_u^P}{\delta u}\right]_{u=u(j),s^P=se^P}^T \left[u - s^P - (u^{(j)} - se^P)\right] \quad -(50)$$

$$( p = 1 , 2 , \cdots , n_s )$$

[ Expression 34 ]

Consequently, the expressions (10), (11), (12), (13) are reconfigured to the following expressions (51), (52), (53), (54) respectively.

$$\Phi_{L1,u}^{P,(j)} = r_{u(j)}^P + g^{P,(j)}\left[u - s^P - (u^{(j)} - se^P)\right] - \delta I_u^P + \delta T_u^P + c(\delta t_u - \delta t^P) + \lambda_{L1}N_{L1,u}^P + \lambda_{L1}\varepsilon_{L1,u}^P \quad -(51)$$

$$\Phi_{L2,u}^{P,(j)} = r_{u(j)}^P + g^{P,(j)}\left[u - s^P - (u^{(j)} - se^P)\right] - \frac{f_{L1}^2}{f_{L2}^2}\delta I_u^P + \delta T_u^P + c(\delta t_u - \delta t^P) + \lambda_{L2}N_{L2,u}^P + \lambda_{L2}\varepsilon_{L2,u}^P$$

$$-(52)$$

$$\rho_{CA,u}^{P,(j)} = r_{u(j)}^P + g^{P,(j)}\left[u - s^P - (u^{(j)} - se^P)\right] + \delta I_u^P + \delta T_u^P + c(\delta t_u - \delta t^P) + e_{CA,u}^P \quad -(53)$$

$$\rho_{P,u}^{P,(j)} = r_{u(j)}^P + g^{P,(j)}\left[u - s^P - (u^{(j)} - se^P)\right] + \frac{f_{L1}^2}{f_{L2}^2}\delta I_u^P + \delta T_u^P + c(\delta t_u - \delta t^P) + e_{P,u}^P \quad -(54)$$

[ Expression 35 ]

At this point the observational L1 carrier phase $\Phi e^{P,(j)}_{L1,u}$, the observational L2 carrier phase $\Phi e^{P,(j)}_{L2,u}$, the observational C/A code pseudorange $\rho e^{P,(j)}_{CA,u}$, and the observational P code pseudorange $\rho e^{P,(j)}_{P,u}$ are redefined to a following expressions (55), (56), (57), (58) respectively.

$$\Phi e_{L1,u}^{P,(j)} \equiv \Phi_{L1,u}^{P,(j)} - \left[r_{u(j)}^P - g^{P,(j)}(u^{(j)} - se^P)\right] \quad -(55)$$

$$\Phi e_{L2,u}^{P,(j)} \equiv \Phi_{L2,u}^{P,(j)} - \left[r_{u(j)}^P - g^{P,(j)}(u^{(j)} - se^P)\right] \quad -(56)$$

$$\rho e_{CA,u}^{P,(j)} \equiv \rho_{CA,u}^{P,(j)} - \left[r_{u(j)}^P - g^{P,(j)}(u^{(j)} - se^P)\right] \quad -(57)$$

$$\rho e_{P,u}^{P,(j)} \equiv \rho_{P,u}^{P,(j)} - \left[r_{u(j)}^P - g^{P,(j)}(u^{(j)} - se^P)\right] \quad -(58)$$

[ Expression 36 ]

19

Thus the expressions (51), (52), (53), (54) are re-described to an expression (59), (60), (61), (62) respectively.
$$\Phi e_{L1,u}^{p,(j)} \cong g^{p,(j)}u - g^{p,(j)}s^p - \delta I_u^p + \delta T_u^p + c(\delta t_u - \delta t^p) + \lambda_{L1}N_{L1,u}^p + \lambda_{L1}\varepsilon_{L1,u}^p \qquad -(59)$$

$$\Phi e_{L2,u}^{p,(j)} \cong g^{p,(j)}u - g^{p,(j)}s^p - \frac{f_{L1}^2}{f_{L2}^2}\delta I_u^p + \delta T_u^p + c(\delta t_u - \delta t^p) + \lambda_{L2}N_{L2,u}^p + \lambda_{L2}\varepsilon_{L2,u}^p \qquad -(60)$$

$$\rho e_{CA,u}^{p,(j)} \cong g^{p,(j)}u - g^{p,(j)}s^p + \delta I_u^p + \delta T_u^p + c[\delta t_u - \delta t^p] + e_{CA,u}^p \qquad -(61)$$

$$\rho e_{P,u}^{p,(j)} \cong g^{p,(j)}u - g^{p,(j)}s^p + \frac{f_1^2}{f_2^2}\delta I_u^p + \delta T_u^p + c[\delta t_u - \delta t^p] + e_{P,u}^p \qquad -(62)$$

[ Expression 37 ]

The observational L1 carrier phase $\Phi e_{L1,u}^{p,(j)}$, the observational L2 carrier phase $\Phi e_{L2,u}^{p,(j)}$, the observational C/A code pseudorange $\rho e_{CA,u}^{p,(j)}$, and the observational P code pseudorange $\rho e_{P,u}^{p,(j)}$ are redefined to a following expressions respectively.
$$\Phi e_{L1,u}^{s,(j)} \cong \begin{bmatrix} \Phi e_{L1,u}^{1,(j)} \\ \cdot \\ \Phi e_{L1,u}^{n,(j)} \end{bmatrix}, \Phi e_{L2,u}^{s,(j)} \cong \begin{bmatrix} \Phi e_{L2,u}^{1,(j)} \\ \cdot \\ \Phi e_{L2,u}^{n,(j)} \end{bmatrix}, \rho e_{CA,u}^{s,(j)} \cong \begin{bmatrix} \rho e_{CA,u}^{1,(j)} \\ \cdot \\ \rho e_{CA,u}^{n,(j)} \end{bmatrix}, \rho e_{P,u}^{s,(j)} \cong \begin{bmatrix} \rho e_{P,u}^{1,(j)} \\ \cdot \\ \rho e_{P,u}^{n,(j)} \end{bmatrix}$$

[ Expression 38 ]

Consequently, the expressions (59), (60), (61), (62) are re-described to the vector-matrix as a following expression (63).
$$
\begin{bmatrix} \Phi e_{L1,u}^{(j)} \\ \Phi e_{L2,u}^{(j)} \\ \rho e_{CA,u}^{(j)} \\ \rho e_{P,u}^{(j)} \end{bmatrix} = \begin{bmatrix} G_u^{(j)} & 1 & -G_{D,u}^{(j)} & -I & -I & I & I & 0 \\ G_u^{(j)} & 1 & -G_{D,u}^{(j)} & -I & -\dfrac{f_{L1}^2}{f_{L2}^2}I & I & 0 & I \\ G_u^{(j)} & 1 & -G_{D,u}^{(j)} & -I & I & I & 0 & 0 \\ G_u^{(j)} & 1 & -G_{D,u}^{(j)} & -I & \dfrac{f_{L1}^2}{f_{L2}^2}I & I & 0 & 0 \end{bmatrix} \begin{bmatrix} u \\ c\delta t_u \\ s \\ c\delta t^s \\ \delta I_u \\ \delta T_u \\ \lambda_{L1}N_{L1,u} \\ \lambda_{L2}N_{L2,u} \end{bmatrix} + \begin{bmatrix} \lambda_{L1}\varepsilon_{L1,u} \\ \lambda_{L2}\varepsilon_{L2,u} \\ e_{CA,u} \\ e_{P,u} \end{bmatrix}
$$

$$-(63)$$

where

$$
G_{D,u}^{(j)} \equiv \begin{bmatrix} g^{1,(j)} & 0 & \cdots & & 0 \\ 0 & g^{2,(j)} & 0 & \cdots & \\ & & & & 0 \\ \cdot & \cdot & & & \vdots \\ 0 & 0 & \cdots & 0 & g^{n,(j)} \end{bmatrix} \quad (n_s \times 3n_s \ \text{matrix})
$$

[ Expression 39 ]

An observation vector sk of the satellite with a precise orbit is defined to an following expression.
$$
sk = s + e_s \ , \quad s = [(s^1)^T, (s^2)^T, \cdots, (s^{ns})^T]^T , \quad 3n_s \times 1
$$

[Expression 40]

Applying this expression to the expression (63), the expression (64) is derived.
$$
\begin{bmatrix} \Phi e_{L1,\mu}^{(j)}(t) \\ \Phi e_{L2,\mu}^{(j)}(t) \\ \rho e_{CA,\mu}^{(j)}(t) \\ \rho e_{P,\mu}^{(j)}(t) \\ sk(t) \\ c\delta te^{s}(t) \\ \delta le_{u}(t) \\ \delta Te_{u}(t) \end{bmatrix} = \begin{bmatrix} G_{u}^{(j)}(t) & 1 & -G_{D,\mu}^{(j)}(t) & -I & -I & I & I & 0 \\ G_{u}^{(j)}(t) & 1 & -G_{D,\mu}^{(j)}(t) & -I & -\dfrac{f_{L1}^{2}}{f_{L2}^{2}}I & I & 0 & I \\ G_{u}^{(j)}(t) & 1 & -G_{D,\mu}^{(j)}(t) & -I & I & I & 0 & 0 \\ G_{u}^{(j)}(t) & 1 & -G_{D,\mu}^{(j)}(t) & -I & \dfrac{f_{L1}^{2}}{f_{L2}^{2}}I & I & 0 & 0 \\ 0 & 0 & I & 0 & 0 & 0 & 0 & 0 \\ 0 & 0 & 0 & I & 0 & 0 & 0 & 0 \\ 0 & 0 & 0 & 0 & I & 0 & 0 & 0 \\ 0 & 0 & 0 & 0 & 0 & I & 0 & 0 \end{bmatrix} \begin{bmatrix} u(t) \\ c\delta t_{u}(t) \\ s(t) \\ c\delta t^{s}(t) \\ \delta I_{u}(t) \\ \delta T_{u}(t) \\ \lambda_{L1}N_{L1,\mu} \\ \lambda_{L2}N_{L2,\mu} \end{bmatrix} + \begin{bmatrix} \lambda_{L1}\varepsilon_{L1,\mu}(t) \\ \lambda_{L2}\varepsilon_{L2,\mu}(t) \\ e_{CA,\mu}(t) \\ e_{P,\mu}(t) \\ e_{s}(t) \\ e_{\delta t}(t) \\ e_{\delta l}(t) \\ e_{\delta T}(t) \end{bmatrix}
$$

$$- (64)$$

[ Expression 41 ]

Utilizing the regression equation described above, we could estimate the GPS satellite's position precisely. And estimating the GPS satellite position precisely, we could estimate the receiver's position more precisely.

Furthermore, utilizing a following algorithm, we could apply the Kalmann Filter to the regression equation, too.

Namely, the state vector s, the clock errors of the GPS $c\delta t^{p}$, the delay of the ionosphere $\delta I_{u}$, the delay of the troposphere $\delta T_{u}$ are defined the following expressions (65a), (65b), (65c), (65d) respectively.

$$s(t) = sk(t) - \dot{e}_{s}(t) \quad - (65a)$$

$$c\delta t^{p}(t) = c\delta te^{p}(t) - e_{\delta t'}(t) \quad - (65b)$$

$$\delta I_{u}(t) = \delta le_{u}(t) - e_{\delta l_{u}}(t) \quad - (65c)$$

$$\delta T_{u}(t) = \delta Te_{u}(t) - e_{\delta T_{u}}(t) \quad - (65d)$$

[ Expression 42 ]

These expressions are applied to the regression equation (64). Furthermore the observational vectors $y_{L1,u}^{(j)}$(t), $y_{L2,u}^{(j)}$(t), $y_{CA,u}^{(j)}$(t), and $y_{P,u}^{(j)}$(t) are defined by a following expressions (66), (67), (68), (69) respectively.

$$y_{L1,\mu}^{(j)}(t) = \Phi e_{L1,\mu}^{(j)}(t) + G_{D,\mu}^{(j)}(t)sk(t) + c\,\delta t e^{P}(t) + \delta I e_u(t) - \delta T e_u(t) \qquad -(66)$$

$$y_{L2,\mu}^{(j)}(t) = \Phi e_{L2,\mu}^{(j)}(t) + G_{D,\mu}^{(j)}(t)sk(t) + c\,\delta t e^{P}(t) + \frac{f_{L1}^2}{f_{L2}^2}\delta I e_u(t) - \delta T e_u(t) \qquad -(67)$$

$$y_{CA,\mu}^{(j)}(t) = \rho e_{L1,\mu}^{(j)}(t) + G_{D,\mu}^{(j)}(t)sk(t) + c\,\delta t e^{P}(t) - \delta I e_u(t) - \delta T e_u(t) \qquad -(68)$$

$$y_{P,\mu}^{(j)}(t) = \rho e_{P,\mu}^{(j)}(t) + G_{D,\mu}^{(j)}(t)sk(t) + c\,\delta t e^{P}(t) - \frac{f_{L1}^2}{f_{L2}^2}\delta I e_u(t) - \delta T e_u(t) \qquad -(69)$$

[ Expression 43 ]

Consequently a new regression equation is described as an expression (70).
$$
\begin{bmatrix} y_{L1,u}^{(j)}(t) \\ y_{L2,u}^{(j)}(t) \\ y_{CA,u}^{(j)}(t) \\ y_{P,u}^{(j)}(t) \end{bmatrix} =
$$

$$
\begin{bmatrix} G_u^{(j)}(t) & 1 & 1 & 0 \\ G_u^{(j)}(t) & 1 & 0 & 1 \\ G_u^{(j)}(t) & 1 & 0 & 0 \\ G_u^{(j)}(t) & 1 & 0 & 0 \end{bmatrix}
\begin{bmatrix} u(t) \\ c\delta t_u \\ \lambda_{L1}N_{L1,u} \\ \lambda_{L2}N_{L2,u} \end{bmatrix}
+
\begin{bmatrix} G_{D,u}^{(j)}e_s(t) + e_{\delta t^P}(t) + e_{\delta I_u}(t) - e_{\delta T_u}(t) + \lambda_{L1}\varepsilon_{L1,u} \\ G_{D,u}^{(j)}e_s(t) + e_{\delta t^P}(t) + \frac{f_{L1}^2}{f_{L2}^2}e_{\delta I_u}(t) - e_{\delta T_u}(t) + \lambda_{L2}\varepsilon_{L2,u} \\ G_{D,u}^{(j)}e_s(t) + e_{\delta t^P}(t) - e_{\delta I_u}(t) - e_{\delta T_u}(t) + e_{CA,u} \\ G_{D,u}^{(j)}e_s(t) + e_{\delta t^P}(t) - \frac{f_{L1}^2}{f_{L2}^2}e_{\delta I_u}(t) - e_{\delta T_u}(t) + e_{P,u} \end{bmatrix}
$$

$$-(70)$$

[ Expression 44 ]

And defining the state equation to this observational equation ( a new regression equation), the Kalmann Filter could be configured.

Meanwhile, in this embodiment described above, the delay of the ionosphere and the delay of the troposphere are estimated at the receiver. But the base station whose position is known and fixed exist, the delay of the ionosphere and the delay of the troposphere could be estimated at the base station using the method described above. And giving the delay of the ionosphere and the delay of the troposphere estimated at base station, and more the error of the satellite orbit and the clock error of the GPS satellite estimated at base station to the receiver, at the receiver we could estimate the receiver's position more precisely.

Additionally, with the embodiment described above, the least-square method is applied to the linear regression equation, but the other estimation algorithm of the parameter could be applied.

And with the embodiment described above, the linear Taylor series expansion is applied to the linear approximation of the receiver's position, but the other expression of the linear approximation could be applied.

And with the embodiment described above, the LAMBDA method is applied to the linear regression equation, but the other estimation algorithm to fix an integer ambiguity could be applied.

And with the embodiment described above, the Kalmann Filter is applied to the linear regression equation, but the other estimation algorithm of condition could be applied.

**Claims**

1. A point positioning apparatus configured to detect distances ($r^p_u$) between a receiver (u) and satellites (p) and a position of the receiver (u) by utilizing satellite signals transmitted from the satellites (p), comprising:

   a satellite data observing device (11) which observes orbit data of the satellites (p) and clock errors ($\delta te^p$) of the satellites (p) from a navigation message included in the satellites' signals or estimated values by off-line processing;
   an ionosphere data getting device (11) which gets delay data ($\delta le_u$) of an ionosphere;
   a troposphere data getting device which gets delay data ($\delta Te_u$) of a troposphere; and
   a position estimating device (13) configured:

   to linear-approximate the position of the receiver (u) with a linear Taylor series expansion about an estimated receiver's (u) position by using the estimation results of previous positions of the receiver (11) and the orbit data of the satellites (p),
   to set up explanatory variables, as unknown values, that include the linear-approximated position of the receiver (u), an integer ambiguity ($N_u$), a clock error ($\delta t_u$) of the receiver (u), clock errors ($\delta t^p$) of the satellites (p), delays ($\delta l_u$) of the ionosphere, delays ($\delta T_u$) of the troposphere,
   to set up objective variables, as observational values, that include carrier phases ($\Phi e_u$), code pseudoranges ($\rho e_u$), the observable clock errors ($\delta te^p$) of the satellites (p), the delay data ($\delta Te_u$) of the ionosphere, the delay data ($\delta Te_u$) of the troposphere,
   to set the regression equation by utilizing coefficients as operational matrix elements that are obtained from partial differentiation of the distances ($r^p_u$) linear-approximating with the linear Taylor series expansion with respect to receiver's (u) coordinates, and
   to estimate at least the position of the receiver by applying a parameter estimation algorithm to the regression equation.

2. The point positioning apparatus according to claim 1,
   wherein the position estimating device (13) is configured to estimate the position of the receiver (u) by fixing the integer ambiguity ($N_u$) by an integer ambiguity estimation method.

3. The point positioning apparatus according to claim 1 or 2,
   further comprising a temporary memory device which is configured to memorize the carrier phases ($\Phi e_u$), the code pseudoranges ($\rho e_u$), the clock error ($\delta tu$) of the receiver (u), the orbit data of the satellites (p), the clock error data ($\delta te^p$) of the satellites (p), the delay data ($\delta le_u$) of the ionosphere, the delay data ($\delta Te_u$) of the troposphere over the number of epochs,
   wherein the position estimating device (13) is configured to set the regression equation of every data got over the number of epochs.

4. The point positioning apparatus according to any one of claims 1 to 3,
   wherein the position estimating device (13) is configured to apply a state estimation algorithm to the regression equation.

5. The point positioning apparatus according to any one of claims 1 to 4,
   wherein the position estimating device (13) is configured to estimate position of the satellites (p) by utilizing the regression equation;
   wherein the objective variables further include the orbit data of the satellites (p); and
   wherein the explanatory variables further include errors of the satellite's (p) orbits.

6. A point position method for detecting distances ($r^p_u$) between a receiver (u) and satellites (p) and.a position of the receiver (u) by utilizing satellite signals transmitted from the satellites (p), comprising steps of:

   observing orbit data of the satellites (p) and clock errors ($\delta te^p$) of the satellites from a navigation message included in satellite signals or estimated values by off-line processing;

getting delay data ($\delta Ie_u$) of an ionosphere and delay data ($\delta Te_u$) of a troposphere;

linear-approximating the position of the receiver (u) with a linear Taylor series expansion about an estimated receiver's (u) position by using the estimation results of previous positions of the receiver (11) and the orbit data of the satellites (p),

setting up explanatory variables, as unknown values, that include the linear-approximated position of the receiver (u), an integer ambiguity ($N_u$), a clock error ($\delta t_u$) of the receiver (u), clock errors ($\delta t^p$) of the satellites (p), delays ($\delta I_u$) of an ionosphere, delays ($\delta T_u$) of a troposphere,

setting up objective variables, as observational values, that include carrier phases ($\Phi e_u$), code pseudoranges ($\rho e_u$), the clock errors ($\delta te^p$) of the satellites (p), the delay data ($\delta I_u$) of the ionosphere, the delay data ($\delta T_u$) of the troposphere,

setting the regression equation by utilizing coefficients as operational matrix elements that are obtained from partial differentiation of the distances ($r^p_u$) linear-approximating with the linear Taylor series expansion with respect to receiver's (u) coordinates, and

estimating at least the position of the receiver (u) by applying a parameter estimation algorithm to the regression equation.

7. The point positioning method according to claim 6,
   wherein the position of the receiver (u) is estimated by fixing the integer ambiguity ($N_u$) by an integer ambiguity estimation method.

8. The point positioning method according to claim 6 or 7,
   comprising the step of memorizing the carrier phases ($\Phi e_u$), the code pseudoranges ($N_u$), the clock error ($\delta t_u$) of the receiver (u), the orbit data of the satellites (p), the clock error data ($\delta te^p$) of the satellites (p), the delay data ($\delta Ie_u$) of the ionosphere, the delay data ($\delta Te_u$) of the troposphere over the number of epochs,
   wherein the regression equation is set by utilizing every data got over the number of epochs.

9. The point positioning method according to any one of claims 6 to 8,
   wherein a state estimation algorithm is applied to the regression equation.

10. The point positioning method according to any one of claim 6 to 9,
    wherein the positions of the satellites (p) are estimated by utilizing the regression equation;
    the objective variables further include the orbit data of the satellites (p); and
    the explanatory variables further include errors of the satellite's orbits.

**Patentansprüche**

1. Punktpositionierungsvorrichtung, welche ausgebildet ist, Abstände ($r^p_u$) zwischen einem Empfänger (u) und Satelliten (p) und eine Position des Empfängers (u) zu detektieren durch Verwenden von von den Satelliten (p) übertragenen Satellitensignalen,
   mit:

   einer Satellitendatenbeobachtungseinrichtung (11), welche Orbitdaten der Satelliten (p) und Taktfehler ($\delta te^p$) der Satelliten (p) aus einer Navigationsnachricht, welche in den Signalen der Satelliten enthalten ist, oder aus bestimmten Werten durch Offline-Verarbeitung beobachtet,

   einer Einrichtung (11) zum Erhalten von Ionosphärendaten, welche Verzögerungsdaten ($\delta Ie_u$) einer Ionosphäre erhält,

   einer Einrichtung zum Erhalten von Troposphärendaten, welche Verzögerungsdaten ($\delta Te_u$) einer Troposphäre, und

   einer Positionsbestimmungseinrichtung (13), die ausgebildet ist:

   die Position des Empfängers (u) linear zu approximieren mit einer linearen Taylor-Reihenentwicklung um eine bestimmte Position des Empfängers (u) durch Verwenden der Bestimmungsergebnisse vorangehender Positionen des Empfängers (u) und der Orbitdaten der Satelliten (p),

   erläuternde Variablen einzustellen als unbekannte Werte, welche die linear approximierte Position des Empfängers (u), einen Wert für eine ganzzahlige Ungewissheit ($N_u$), einen Taktfehler ($\delta t_u$) des Empfängers (u), Taktfehler ($\delta t^p$) der Satelliten (p), Verzögerungen ($\delta I_u$) der Ionosphäre, Verzögerungen ($\delta T_u$) der Tro-

posphäre aufweisen,

objektive Variablen als Beobachtungswerte einzustellen, welche Trägerphasen ($\Phi e_u$), Codepseudobereiche ($\rho e_u$), die beobachtbaren Taktfehler ($\delta te^p$) der Satelliten (p), die Verzögerungsdaten ($\delta le_u$) der Ionosphäre, die Verzögerungsdaten ($\delta Te_u$) der Troposphäre aufweisen,

die Regressionsgleichung einzustellen durch Verwenden der Koeffizienten als operative Matrixelemente die erhalten werden durch partielle Differentiation der Abstände ($r^p_u$) die in Bezug auf die Koordinaten des Empfängers (u) mit der linearen Taylor-Reihenentwicklung linear approximieren, und

zumindest die Position des Empfängers (u) durch Anwenden eines Parameterbestimmungsalgorithmus auf die Regressionsgleichung zu bestimmen.

2. Punktpositionierungsvorrichtung nach Anspruch 1,
bei welcher die Positionsbestimmungseinrichtung (13) ausgebildet ist, die Position des Empfängers (u) zu bestimmen durch Fixieren der ganzzahligen Ungewissheit ($N_u$) durch ein Bestimmungsverfahren für die ganzzahlige Ungewissheit.

3. Punktpositionierungsvorrichtung nach Anspruch 1 oder 2,
welche des Weiteren aufweist eine Temporärspeichereinrichtung, welche ausgebildet ist, die Trägerphasen ($\Phi e_u$), die Codepseudobereiche ($\rho e_u$), die Taktfehler ($\delta tu$) des Empfängers (u), die Orbitdaten der Satelliten (p), die Taktfehlerdaten ($\delta te^p$) der Satelliten (p), die Verzögerungsdaten ($\rho le_u$) der Ionosphäre, die Verzögerungsdaten ($\delta Te_u$) der Troposphäre über die Anzahl von Zeitspannen zu speichern,
wobei die Punktpositionierungsvorrichtung (13) ausgebildet ist, die Regressionsgleichung einzustellen in Bezug auf sämtliche Daten, die über die Anzahl der Zeitspannen erhalten wurden.

4. Punktpositionierungsvorrichtung nach einem der Ansprüche 1 bis 3,
bei welcher die Positionsbestimmungseinrichtung (13) ausgebildet ist, einen Zustandsbestimmungsalgorithmus auf die Regressionsgleichung anzuwenden.

5. Punktpositionierungsvorrichtung nach einem der Ansprüche 1 bis 4,
bei welcher die Positionsbestimmungseinrichtung (13) ausgebildet ist, die Position der Satelliten (p) durch Verwenden der Regressionsgleichung zu bestimmen,
bei welcher die objektiven Variablen des Weiteren die Orbitdaten der Satelliten (p) aufweisen und
bei welcher die erläuternden Variablen des Weiteren die Fehler der Orbits der Satelliten (p) aufweisen.

6. Punktpositionierungsverfahren zum Bestimmen der Entfernungen ($r^p_u$) zwischen einem Empfänger (u) und Satelliten (p) und einer Position des Empfängers (u) durch Verwenden von von den Satelliten (p) übertragenen Satellitensignalen, mit den Schritten:

Beobachten der Orbitdaten der Satelliten (p) und der Taktfehler ($\delta te^p$) der Satelliten (p) aus einer Navigationsmitteilung, die in den Satellitensignalen enthalten ist oder aus Bestimmungswerten durch Offline-Verarbeitung,

Erhalten von Verzögerungsdaten ($\delta le_u$) einer Ionosphäre und Verzögerungsdaten ($\delta Te_u$) einer Troposphäre,

lineares Approximieren der Position des Empfängers (u) mittels einer linearen Taylor-Reihenentwicklung um eine bestimmte Position des Empfängers (u) durch Verwenden der Bestimmungsergebnisse vorangehender Positionen des Empfängers (11) und der Orbitdaten der Satelliten (p),

Einstellen erläuternder Variablen als unbekannte Werte, welche aufweisen die linear approximierte Position des Empfängers (u), eine ganzzahlige Ungewissheit ($N_u$), einen Taktfehler ($\delta t_u$) des Empfängers (u), Taktfehlern ($\delta t^p$) der Satelliten (p), Verzögerungen ($\delta l_u$) einer Ionosphäre, Verzögerungen ($\delta T_u$) einer Troposphäre,

Einstellen objektiver Variablen als Beobachtungswerte, welche aufweisen Trägerphasen ($\Phi e_u$), Codepseudobereiche ($\rho e_u$), die Taktfehler ($\delta te^p$) der Satelliten (p), die Verzögerungsdaten ($\delta l_u$) der Ionosphäre, die Verzögerungsdaten ($\delta T_u$) der Troposphäre,

Einstellen der Regressionsgleichung durch Verwenden von Koeffizienten als operativen Matrixelementen, die erhalten werden aus einer partiellen Differentiation der Abstände ($r^p_u$) in Bezug auf die Koordinaten des Empfängers (u) mit der linearen Taylor-Reihenentwicklung linear approximieren, und

Bestimmen zumindest der Position des Empfängers (u) durch Anwenden eines Parameterbestimmungsalgorithmus auf die Regressionsgleichung.

7. Punktpositionierungsverfahren nach Anspruch 6,
bei welchem die Position des Empfängers (u) bestimmt wird durch Fixieren der ganzzahligen Ungewissheit ($N_u$) mittels eines Bestimmungsverfahrens für die ganzzahlige Ungewissheit.

**8.** Punktpositionierungsverfahren nach Anspruch 6 oder 7, mit einem Schritt des Speicherns der Trägerphasen ($\Phi e_u$), der Codepseudobereiche ($\rho e_u$), des Taktfehlers ($\delta t_u$) des Empfängers (u), der Orbitdaten der Satelliten (p), der Taktfehlerdaten ($\delta te^p$) der Satelliten (p), der Verzögerungsdaten ($\delta le_u$) der Ionosphäre, die Verzögerungsdaten ($\delta Te_u$) der Troposphäre über die Anzahl der Zeiträume, wobei die Regressionsgleichung eingestellt wird durch Verwenden sämtlicher Daten, die über die Anzahl der Zeiträume erhalten wurden.

**9.** Punktpositionierungsverfahren nach einem der Ansprüche 6 bis 8, bei welchem ein Zustandsbestimmungsalgorithmus auf die Regressionsgleichung angewandt wird.

**10.** Punktpositionierungsverfahren nach einem der Ansprüche 6 bis 9, bei welchem die Positionen der Satelliten (p) bestimmt werden durch Verwenden der Regressionsgleichung, die objektiven Variablen des Weiteren die Orbitdaten der Satelliten (p) aufweisen; und die erläuternden Variablen des Weiteren die Fehler der Orbits der Satelliten (p) aufweisen.

**Revendications**

**1.** Appareil de positionnement de point configuré pour détecter des distances ($r^p_u$) entre un récepteur (u) et des satellites (p) et une position du récepteur (u) en utilisant des signaux de satellite transmis par les satellites (p), comprenant :

un dispositif d'observation de données de satellite (11) qui observe des données d'orbite des satellites (p) et des erreurs d'horloge ($\delta te^p$) des satellites (p) à partir d'un message de navigation inclus dans les signaux des satellites ou de valeurs estimées par un traitement hors ligne ;
un dispositif d'acquisition de données ionosphériques (11) qui acquiert des données de retard ($\delta le_u$) d'une ionosphère ; et
un dispositif d'acquisition de données troposphériques qui acquiert des données de retard ($\delta Te_u$) d'une troposphère ; et
un dispositif d'estimation de position (13) configuré :

pour effectuer une approximation linéaire de la position du récepteur (u) à l'aide d'un développement linéaire en série de Taylor autour d'une position estimée du récepteur (u) en utilisant les résultats d'estimation de positions précédentes du récepteur (u) et les données d'orbite des satellites (p),
pour établir des variables explicatives, en tant que valeurs inconnues, qui comprennent la position déterminée par approximation linéaire du récepteur (u), une ambiguïté de nombre entier ($N_u$), une erreur d'horloge ($\delta t_u$) du récepteur (u), des erreurs d'horloge ($\delta t^p$) des satellites (p), des retards ($\delta I_u$) de la ionosphère, des retards ($\delta T_u$) de la troposphère,
pour établir des variables objectives, en tant que valeurs d'observation, qui comprennent des phases de porteuse ($\Phi e_u$), des pseudo-distances de code ($\rho e_u$), les erreurs d'horloge observables ($\Phi te^p$) des satellites (p), les données de retard ($\delta Te_u$) de la ionosphère, les données de retard ($\delta Te_u$) de la troposphère,
pour constituer l'équation de régression en utilisant des coefficients comme éléments de matrice opérationnelle qui sont obtenus à partir de la différentiation partielle des distances ($r^p_u$) approximant linéairement le développement linéaire en série de Taylor relativement aux coordonnées du récepteur (u), et
pour estimer au moins la position du récepteur en appliquant un algorithme d'estimation paramétrique à l'équation de régression.

**2.** Appareil de positionnement de point selon la revendication 1, dans lequel le dispositif d'estimation de position (13) est configuré pour estimer la position du récepteur (u) en fixant l'ambiguïté de nombre entier ($N_u$) à l'aide d'un procédé d'estimation d'ambiguïté de nombre entier.

**3.** Appareil de positionnement de point selon la revendication 1 ou la revendication 2, comprenant en outre un dispositif de mémoire temporaire qui est configuré pour mémoriser les phases de porteuse ($\Phi e_u$), les pseudo-distances de code ($\rho e_u$), les erreurs d'horloge ($\delta t_u$) du récepteur (u), les données d'orbite des satellites (p), les données d'erreur d'horloge ($\delta te^p$) des satellites (p), les données de retard ($\delta le_u$) de la ionosphère, les données de retard ($\delta Te_u$) de la troposphère sur le nombre d'époques, le dispositif d'estimation de position (13) étant configuré pour constituer l'équation de régression de chaque donnée acquise sur le nombre d'époques.

4. Appareil de positionnement de point selon l'une quelconque des revendications 1 à 3, dans lequel le dispositif d'estimation de position (13) est configuré pour appliquer un algorithme d'estimation d'état à l'équation de régression.

5. Appareil de positionnement de point selon l'une quelconque des revendications 1 à 4, dans lequel le dispositif d'estimation de position (13) est configuré pour estimer la position des satellites (p) en utilisant l'équation de régression ; dans lequel les variables objectives comprennent en outre les données d'orbite des satellites (p) ; et dans lequel les variables explicatives comprennent en outre des erreurs affectant les orbites des satellites (p).

6. Procédé de positionnement de point pour détecter des distances ($r^p_u$) entre un récepteur (u) et des satellites (p) et une position du récepteur (u) en utilisant des signaux de satellite transmis par les satellites (p), le procédé comprenant les étapes consistant à :

   observer des données d'orbite des satellites (p) et des erreurs d'horloge ($\delta te^p$) des satellites à partir d'un message de navigation inclus dans les signaux des satellites ou de valeurs estimées par un traitement hors ligne ; acquérir des données de retard ($\delta Ie_u$) d'une ionosphère et des données de retard ($\delta Te_u$) d'une troposphère ; et effectuer une approximation linéaire de la position du récepteur (u) à l'aide d'un développement linéaire en série de Taylor autour d'une position estimée du récepteur (u) en utilisant les résultats d'estimation de positions précédentes du récepteur (u) et les données d'orbite des satellites (p),
   établir des variables explicatives, en tant que valeurs inconnues, qui comprennent la position déterminée par approximation linéaire du récepteur (u), une ambiguïté de nombre entier ($N_u$), une erreur d'horloge ($\delta t_u$) du récepteur (u), des erreurs d'horloge ($\delta t^p$) des satellites (p), des retards ($\delta I_u$) d'une ionosphère, des retards ($\delta T_u$) d'une troposphère,
   établir des variables objectives, en tant que valeurs d'observation, qui comprennent des phases de porteuse ($\Phi e_u$), des pseudo-distances de code ($\rho e_u$), les erreurs d'horloge ($\delta te^p$) des satellites (p), les données de retard ($\delta I_u$) de la ionosphère, les données de retard ($\delta T_u$) de la troposphère,
   constituer l'équation de régression en utilisant des coefficients comme éléments de matrice opérationnelle qui sont obtenus à partir de la différentiation partielle des distances ($r^p_u$) approximant linéairement le développement linéaire en série de Taylor relativement aux coordonnées du récepteur (u), et
   estimer au moins la position du récepteur (u) en appliquant un algorithme d'estimation paramétrique à l'équation de régression.

7. Procédé de positionnement de point selon la revendication 6, dans lequel la position du récepteur (u) est estimée en fixant l'ambiguïté de nombre entier ($N_u$) à l'aide d'un procédé d'estimation d'ambiguïté de nombre entier.

8. Procédé de positionnement de point selon la revendication 6 ou la revendication 7, comprenant l'étape consistant à mémoriser les phases de porteuse ($\Phi e_u$), les pseudo-distances de code ($\rho e_u$), les erreurs d'horloge ($\delta t_u$) du récepteur (u), les données d'orbite des satellites (p), les données d'erreur d'horloge ($\delta te^p$) des satellites (p), les données de retard ($\delta Ie_u$) de la ionosphère, les données de retard ($\delta Te_u$) de la troposphère sur le nombre d'époques,
   l'équation de régression étant constituée en utilisant chaque donnée acquise sur le nombre d'époques.

9. Procédé de positionnement de point selon l'une quelconque des revendications 6 à 8, dans lequel un algorithme d'estimation d'état est appliqué à l'équation de régression.

10. Procédé de positionnement de point selon l'une quelconque des revendications 6 à 9, dans lequel les positions des satellites (p) sont estimées en utilisant l'équation de régression ;
    les variables objectives comprennent en outre les données d'orbite des satellites (p) ; et
    les variables explicatives comprennent en outres des erreurs affectant les orbites de satellite.

GPS Receiver — 30

Navigation Message Analysis Device — 11

Satellite Information Processing Device — 12

Point Positioning Operating Device — 13

Fig. 1

EP 1 793 238 B1

START

Getting a carrier phase
and a code peudorange. $\sim$S1

Getting a navigation messarge. $\sim$S2

Analyzing the navigation messarge
Getting a clock error data of the satellites,
the orbit data of the satellites,
a delay data of an ionosphere,
and a delay data of a tropospere. $\sim$S3

Estimating an integer ambiguity $N_{L1}, N_{L2}$, a clock error of a receiver $\delta t_u$,
and a receiver's position u, from the observational values comprising
of the delay date of the ionospere, the delay data of the troposphere,
and the clock error data of the satellites, by utilizing a regression
equation applied a least square method. $\sim$S4

END

Fig. 2

30

Fig. 3

Fig. 4

## REFERENCES CITED IN THE DESCRIPTION

**Patent documents cited in the description**

- US 5899957 A
- US 5963167 A
- US 5828336 A

**Non-patent literature cited in the description**

- *JAPAN ASSOCIATION OF SURVEYORS,* 15 November 1989, 121-140
- The GPS navigation message. *Navigation,* 1980, vol. 1, 55-73